# EUROPEAN PATENT APPLICATION

(11) **EP 4 656 456 A1**
(43) Date of publication of application: **03.12.2025**
(21) Application number: 24178222.6
(22) Date of filing: 27.05.2024
(51) Int. Cl.: B60P 1/28

(54) **A LOAD BODY COMPRISING AN OPENING WITH A LINER AND A METHOD OF REDUCING CARRYBACK**

(71) Applicant: Volvo Construction Equipment AB, 631 85 Eskilstuna (SE)
(72) Inventor: TIGER, Daniel, 360 51 HOVMANTORP (SE)
(74) Representative: Ström & Gulliksson AB

(57) **Abstract**

A load body (1) for a load transport vehicle (50), the load body (1) being articulatable between a transport position and a tipping position and comprising a wall (10f) that is arranged to be elevated in the tipping position, wherein said wall (10f) comprises a wall opening (20) that is covered by a flexible liner (30).

## Description

### TECHNICAL FIELD

The disclosure relates generally to load transport or load handling vehicles. In particular aspects, the disclosure relates to a load body for a load transport/handling vehicle and to method of reducing carryback in a load body of a load transport/handling vehicle. The disclosure can be applied to heavy-duty vehicles, such as trucks and construction equipment including dump trucks, articulated haulers, rigid haulers, excavators, wheel loaders among other vehicle types. Although the disclosure may be described with respect to a particular vehicle, the disclosure is not restricted to any particular vehicle.

### BACKGROUND

When material, such as loose material including soil, is handled by a load body of a load transport vehicle, the problem often referred to as carryback may occur. Carryback involves that some material gets stuck in the load body, for example after a tipping cycle. Carryback may also be referred to as carry back load. For reasons of ensuring high productivity and safety, there is a desire to reduce the carryback. Present solutions are typically based on exhaust gases from combustion engines being utilized to heat the load body to release stuck material. Other solutions involve reducing the coefficient of friction of the load body.

### SUMMARY

According to a first aspect of the disclosure, there is provided a load body for a load transport vehicle, the load body being articulatable between a transport position and a tipping position and comprising a wall that is arranged to be elevated in the tipping position, wherein said wall comprises a wall opening that is covered by a flexible liner.

The first aspect of the disclosure may seek to solve the problem of ensuring high productivity and safety during load handling. A technical benefit may involve reducing carryback in an efficient, cost-effective, reliable and durable way. Should any load, such as loose material, for example moist loose material such as moist gravel or sand, be stuck in the load body, that load may be released from the load body by means of the flexible liner.

For example, the weight of the load per se may cause the flexible liner to move, i.e. deform, as the wall with the flexible liner is elevated. The stuck load may drag along, and thus deform, the flexible liner. In addition, or alternatively, there may be provided a motion-inducing assembly that causes the flexible liner to move, i.e. deform. The fact that the flexible liner covers a wall opening may facilitate movement of the flexible liner.

In some detail, the load may press against the flexible liner such that it deforms, e.g. bulges out through, the wall opening. When the wall with the flexible liner is elevated, the pressure that the load exerts on the flexible liner covering the wall opening decreases, and the deformation caused by the load returns.

Further, the wall opening may allow for appropriate positioning of the optional motion-inducing assembly, e.g. such that the motion-inducing assembly does not occupy space inside the load body. When the flexible liner moves, i.e. deforms, the stuck load may be released from the load body and by means of gravity then fall and/or slide out of the load body which is oriented in the tipping position.

Optionally in some examples, including in at least one preferred example, the flexible liner is attached to the load body along a periphery of the flexible liner. A technical benefit may include high durability and simple assembly, and facilitated replacement of the flexible liner if required after a period of use. For example, the flexible liner may cover essentially an entire wall, typically a front wall, of the load body. If such a flexible liner is attached to the load body along a periphery of the flexible liner, then the attachment points may be positioned in corners of the load body and may therefore be subjected to less mechanical impact from a load that is filled into the load body. Alternatively, the flexible liner may cover only a portion of the wall. If such a flexible liner is attached to the load body along a periphery of the flexible liner, then the attachment points may be positioned along the wall opening such that assembly and replacement of the flexible sheet is facilitated.

Optionally in some examples, including in at least one preferred example, the size of the flexible liner is less than 25 percent of a total inner wall area of the load body. A technical benefit may include a relatively limited use of liner material, and simple assembly.

Optionally in some examples, including in at least one preferred example, the flexible liner covers substantially the entire wall that comprises the wall opening. In addition to the above mentioned technical benefits, such a flexible liner may be particularly efficient in removing stuck load, i.e. may be particularly efficient for carryback reduction. Furthermore, such a flexible liner need not be tailored to the size or position of the wall opening that the flexible liner covers.

Optionally in some examples, including in at least one preferred example, the size of the wall opening is less than 10 percent of the size of the wall that comprises the wall opening. A technical benefit may include that the mechanical stress that the flexible liner is subjected to may be relatively low, which ensures high reliability and durability. Furthermore, such a wall opening may be made in existing load bodies, without substantially affect the structural strength of the load body. Also, the use of liner material may be relatively low, and simple assembly thereof may be ensured.

Optionally in some examples, including in at least one preferred example, the wall that comprises the wall opening extends between a bottom end and a top end, and the wall opening is positioned closer to the bottom end than to the top end. Such a position of the wall opening may ensure that a portion of the flexible liner that covers the wall opening is in contact with a load in the load body.

Optionally in some examples, including in at least one preferred example, the load body comprises a motion-inducing assembly that is in contact, or is arranged to be brought in contact, with the flexible liner to cause the flexible liner to move. A technical benefit may include that the motion-inducing assembly improves the carryback reduction.

Optionally in some examples, including in at least one preferred example, the motion-inducing assembly comprises a weight that is attached to the flexible liner. A technical benefit may include that the weight may cause the flexible liner to move, i.e. deform, when the weight is affected by an acceleration. Thus, the weight may improve the carryback reduction. The weight may be accelerated when the load transport vehicle is driven, and/or when the load body is articulated (brought between the transport position and the tipping position). Alternatively, or in addition, the motion-inducing assembly comprises a member that is adapted to be brought in contact with the flexible liner to cause the flexible liner to move, i.e. deform. Thus, the member may improve the carryback reduction. Said member may be referred to as a motion-inducing member. The motion-inducing member may be arranged to move the flexible liner via the weight, i.e. the motion-inducing member may be in contact, or may be adapted to be brought in contact, with the weight.

Optionally in some examples, including in at least one preferred example, the load body comprises a bracket structure that is adapted to be connected to a chassis of the load transport vehicle, wherein the bracket structure carries the member. A technical benefit may involve that a relative motion between the chassis and the load body may be utilized for carryback reduction. A motion-inducing assembly that is based on a weight and/or such a bracket structure may be referred to as a passive motion-inducing assembly, and may bring the advantage that no control system or actuator is required for carryback reduction.

Optionally in some examples, including in at least one preferred example, the motion-inducing assembly comprises an actuator that is activatable to cause the flexible liner to move. A motion-inducing assembly that includes an activatable actuator may be referred to as an active motion-inducing assembly, and may bring the advantage that the carryback reduction may be controllable and may be particularly effective.

Optionally in some examples, including in at least one preferred example, the actuator is a vibrator member that is attached to the member that is adapted to be brought in contact with the flexible liner. For example, the vibrator member may be attached to the above-mentioned weight. The vibrator member may carry the weight. A technical benefit may include that the vibrator member may vibrate the flexible liner to obtain a controllable and effective carryback reduction.

Optionally in some examples, including in at least one preferred example, the load body comprises a front wall, a rear wall and two opposing lateral side walls, wherein the wall that comprises the wall opening that is covered by the flexible liner is the front wall. Typically, a load transport vehicle with an articulatable or tiltable load body as adapted such that the load body may be tilted to a tipping position to pour out the load of the load body at the rear end of the load body, i.e. at the rear end of the load transport vehicle. Thus, the front wall is typically the most elevated or raised wall of the load body, when the load body is in its tipping position. Alternatively, or in addition, the wall that comprises the wall opening that is covered by the flexible liner may be a bottom wall or a lateral side wall. The wall that comprises the wall opening that is covered by the flexible liner may be oriented substantially vertically when the load body is in its transport position. The wall that comprises the wall opening that is covered by the flexible liner may, apart from said wall opening, be solid, i.e. closed. Thus, the wall opening that is provided for reducing carryback may be the only opening in the wall.

According to a second aspect of the disclosure, there is provided a transport vehicle that comprises a load body, the load body being articulatable between a transport position and a tipping position and comprising a wall that is arranged to be elevated in the tipping position, wherein said wall comprises a wall opening that is covered by a flexible liner.

Optionally in some examples, including in at least one preferred example, the transport vehicle comprises a chassis that supports the articulatable load body. The chassis may comprise a motion-inducing assembly that is in contact, or is arranged to be brought in contact, with the flexible liner to cause the flexible liner to move. The motion-inducing assembly may be of the above-described types.

According to a third aspect of the disclosure, there is provided a method of reducing carryback in a load body of a load transport vehicle, the method comprising inducing a motion of a flexible liner covering a wall opening in a wall of the load body, wherein inducing the motion of the flexible liner comprises activating an actuator that is connected to the flexible liner.

The load transport vehicle may generally be referred to as a load handling vehicle. Typically, the vehicle is adapted to be filled with a load, transport the load, and discharge the load. The load body may for example be a body bin, a bed, a trough, a digging bucket, an excavator bucket or a scoop. The load may be loose material including sand, gravel, rock fragments, soil or debris.

The articulatable load body may be articulatable, in other words pivotable or tippable, between the transport position and the tipping position. Thus, the first aspect of the disclosure provides a load body being articulatable or pivotable or tippable between the transport position and the tipping position. Typically, in the transport position the load body is oriented to be filled with load and retain the load. In the transport position the load body may be oriented substantially horizontally, and may be said to be in a transport posture. Typically, in the tipping position the load body is oriented to discharge or pour the load from the load body. In the tipping position the load body may be oriented at a tipping angle to the horizontal, and may be said to be in a tipping or dumping posture.

The flexible liner may be arranged to be in contact with a load in the load body. The wall opening that is covered by the flexible liner may be positioned adjacent a load in the load body, such that said load is in contact with a portion of the flexible liner that covers the wall opening. The flexible liner may alternatively be referred to as a carryback-reducing flexible liner, a flexible sheet or a flexible cover material.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary view of a load transport vehicle with a load body according to an example.
**FIG. 2** and **3** are exemplary views of a wall of the load body of **FIG. 1****,** the wall being covered by a flexible liner.
**FIG. 4** to **6** show the wall of **FIG. 2** and **3** and three examples of motion-inducing assemblies.
**FIG. 7** is a flow chart illustrating a method of reducing carryback in a load body.

### DETAILED DESCRIPTION

The detailed description set forth below provides information and examples of the disclosed technology with sufficient detail to enable those skilled in the art to practice the disclosure.

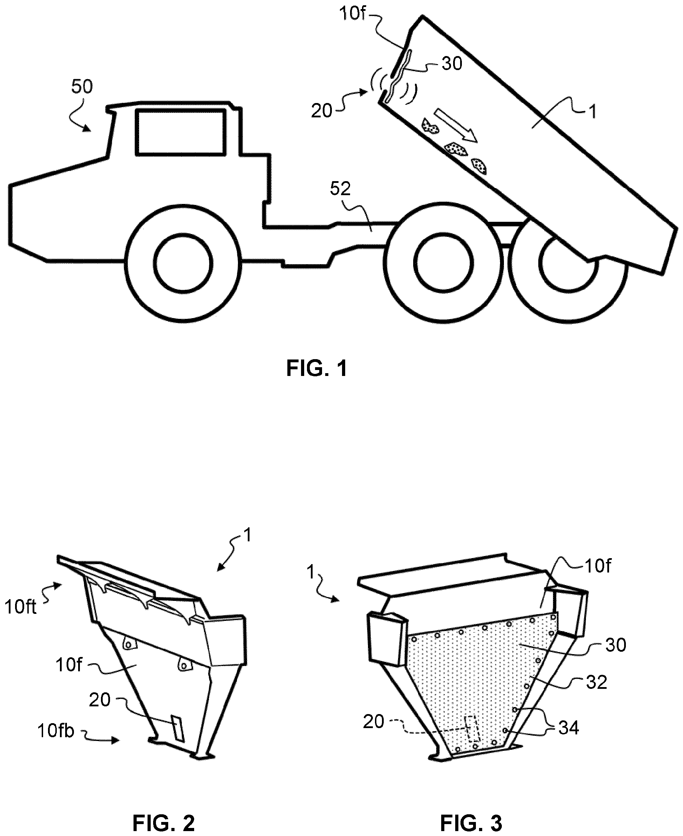

**FIG. 1** discloses a load body 1 for a load transport vehicle 50. The load transport vehicle 50 is depicted as an articulated hauler. The load body 1 is articulatable between an undepicted transport position and a tipping position shown in **FIG. 1****.** The load body 1 comprises a wall 10f that is arranged to be elevated in the tipping position (**FIG. 1**). As is illustrated in each one of **FIG. 1** to **6****,** the wall 10f comprises a wall opening 20, which as shown in **FIG. 1** and **3** is covered by a flexible liner 30. As is shown, apart from the wall opening 20 said wall 10f is solid.

The flexible liner 30 may, as illustrated, be positioned on an inside of the wall 10f, i.e. inside the load body 1. Referring to in **FIG. 3****,** the flexible liner 30 may be attached to the load body 1 along a periphery 32 of the flexible liner 30. The flexible liner 30 may, as depicted, comprise a number of attachment points 34 arranged at the periphery 32 of the flexible liner 30. The attachment points 34 may be through-holes made in the flexible liner 30. For example, the flexible liner 30 may comprise rubber, which may be durable, may securely cover the wall opening 20 and may provide suitable flexible properties.

As is exemplified, see in particular **FIG. 1****,** the load body 1 may comprise a plurality of walls, wherein at least one wall is free from a flexible liner. As is shown, the load body 1 may comprise a front wall 10f, a rear wall, two opposing lateral side walls, and a bottom wall. The load body 1 may also comprise a top wall. The wall of the load body 1 that comprises the wall opening 20 that is covered by the flexible liner 30 is in the disclosed example the front wall 10f. As is illustrated in **FIG.** 1 to **6****,** the front wall 10f may apart from the wall opening 20 be solid.

The wall opening 20 may be referred to as a carryback reducing wall opening 20. The flexible liner 30 may be referred to as a carryback reducing flexible liner 30. The wall 10f that comprises the carryback reducing wall opening(20 may be referred to as a carryback reducing wall 10f. The carryback reducing wall opening 20 may be the only opening in the front wall 10f. In other words, apart from the carryback reducing wall opening 20, the front wall 10f may be substantially closed. By substantially closed is meant that there may, in addition to the carryback reducing wall opening 20, exist small openings such as attachments openings for fasteners such as screws.

It is believed that in a typical application, it may be sufficient to arrange a wall opening 20 and a flexible liner 30 at one single wall of the load body. For reasons of cost, and to not substantially affect the structural strength of the load body 1, there may as depicted be one single wall opening 20. More precisely, there may be one single wall opening 20 in one single wall of the load body 1. Thus, the load body 1 may comprise a plurality of walls, wherein at least one wall is free from a wall opening. In the example of **FIG. 1****,** there is a front wall 10f that is provided with one single wall opening 20 that is covered by a flexible liner 30, while a bottom wall and two opposing lateral side walls are free from wall openings. More precisely, there is a front wall 10f that is provided with one single wall opening 20 that is covered by one single flexible liner 30, while a bottom wall and two opposing lateral side walls are free from wall openings and flexible liners. In other examples, one or more wall opening 20 covered by a flexible liner 30 may be provided in a front wall, a bottom wall or a lateral side wall of a load body.

The size or area of the flexible liner 30 may be less than 25 percent of a total inner wall area of the load body 1, as in the case in the example of **FIG. 1****.** The size and shape of the flexible liner 30 may be adapted to the wall 10f that comprises the wall opening 20, see especially **FIG. 3****.** Still referring to **FIG. 3****.** Still the flexible liner 30 may cover substantially the entire wall 10f that comprises the wall opening 20. Furthermore, the size or area of the wall opening 20 may be less than 10 percent of the size or area of the wall 10f that comprises the wall opening 20, such that the wall opening 20 does not substantially affect the structural strength of the wall 10f that comprises the wall opening 20.

Referring to **FIG. 2** the wall 10f that comprises the wall opening 20 may extend between a bottom end 10fb and a top end 10ft, and the wall opening 20 may be positioned closer to the bottom end 10fb than to the top end 10ft. Thereby, the wall opening 20 is positioned where the carryback typically gets stuck to the load body, as is apprehended from **FIG. 1****.** In the disclosed example, the wall opening 20 extends from a bottom opening edge to a top opening edge, and the bottom opening edge is positioned less than 30 centimeters from the bottom end 10fb of the wall 10f.

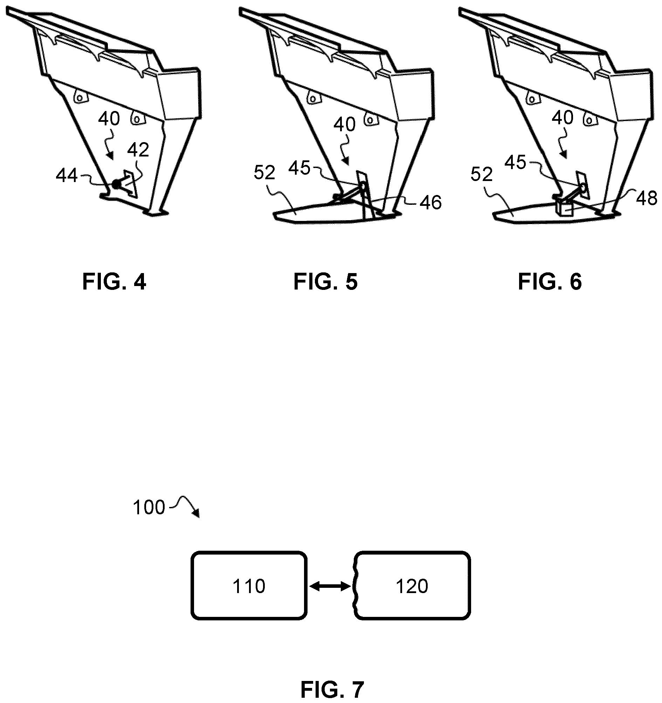

Referring now to **FIG. 4** to **FIG. 6****,** the load body 1 may comprising a motion-inducing assembly 40 that is in contact, or is arranged to be brought in contact, with the flexible liner 30 to cause the flexible liner 30 to move.

In the example of **FIG. 4****,** the motion-inducing assembly 40 comprises a weight 44 that is attached to the flexible liner 30. Further, there is a mount 42 that is attached to the flexible liner 30 and that carries the weight 44. As is shown, the mount 42 extends through the wall opening 20. The mount 42, which distances the weight 44 from the flexible liner 30, increases the movement and deformation of the flexible liner 30 when the load transport vehicle 50 is driven, and/or when the load body 1 is articulated.

In the examples of **FIG. 5** and **FIG. 6****,** the motion-inducing assembly 40 comprises a member 45, or motion-inducing member, that is adapted to be brought in contact with the flexible liner 30. As is illustrated, the motion-inducing member 45 is rounded to avoid or reduce damaging the flexible liner 30. More precisely, the motion-inducing member 45 may as depicted comprise a substantially spherical surface that is adapted to be brought in contact with the flexible liner 30.

Referring to **FIG. 5** and the load body 1 or more precisely the motion-inducing assembly 40 may comprise a bracket structure 46 that is adapted to be connected to a chassis 52 (also denoted in **FIG. 1**) and of the load transport vehicle 50, wherein the bracket structure 46 carries the motion-inducing member 45. As it to be apprehended from **FIG. 1** and **FIG. 5****,** when the load transport vehicle 50 is driven, and when the load body 1 is articulated (tipped) with respect to the load transport vehicle 50, the motion-inducing member 45 held by the bracket structure 46 deforms and rubs against the flexible liner 30 through the wall opening 20. Thereby, any material, e.g. moist sand, which is stuck on the flexible liner 30 may detach from the flexible liner 30. The bracket structure 46 or the motion-inducing member 45 may extend through the wall opening 20.

Referring to **FIG. 6** the motion-inducing assembly 40 may comprise an actuator 48 that is activatable to cause the flexible liner 30 to move. For example, the actuator 48 may be electrically, pneumatically, or hydraulically activatable. The actuator 48 may be a vibrator member. As is shown, the actuator 48 may be a vibrator member that is adapted contact the flexible liner 30. In more detail, as is shown, the vibrator member 48 may be attached to the motion-inducing member 45.

**FIG. 7** illustrates a method 200 of reducing carryback in a load body. The method 100 may be implemented using the load body 1 and/or the transport vehicle 50 described herein.

The method 100 comprises inducing 120 a motion of a flexible liner 30 covering a wall opening 20 in a wall 10f of the load body 1.

Further, the method 100 may comprise tipping 110 the load body 1 before and/or during inducing 120 the motion of the flexible liner 30. Also, or alternatively, the method 100 may comprise tipping 110 the load body 1 after and/or during inducing 120 the motion of the flexible liner 30. As is to be apprehended from the above description, in particular the description that refers to the example of **FIG. 6****,** inducing 120 the motion of the flexible liner 30 may comprise activating an actuator 48 that is connected to the flexible liner 30. It is however to be understood that the motion of the flexible liner 30 may be induced simply by driving the transport vehicle 50, or by tipping the load body 1, as a result of the flexible liner 30 covering the wall opening 20.

Examples according to the following clauses are also disclosed:
1. A load body (1) for a load transport vehicle (50), the load body (1) being articulatable between a transport position and a tipping position and comprising a wall (10f) that is arranged to be elevated in the tipping position, wherein said wall (10f) comprises a wall opening (20) that is covered by a flexible liner (30).
2. The load body (1) of clause 1, wherein the flexible liner (30) is positioned on an inside of the wall (10f).
3. The load body (1) of clause 1 or 2, wherein the flexible liner (30) is attached to the load body (1) along a periphery (32) of the flexible liner (30).
4. The load body (1) of clause 3, wherein the flexible liner (30) comprises a number of attachment points (34) arranged at the periphery (32) of the flexible liner (30).
5. The load body (1) of clause 4, wherein the attachment points (34) are through-holes.
6. The load body (1) of any preceding clause, wherein the flexible liner (30) comprises rubber.
7. The load body (1) of any preceding clause, comprising a plurality of walls, wherein at least one wall is free from a flexible liner.
8. The load body (1) of any preceding clause, comprising a plurality of walls, wherein at least one wall is free from a wall opening.
9. The load body (1) of any preceding clause, wherein the size of the flexible liner (30) is less than 25 percent of a total inner wall area of the load body (1).
10. The load body (1) of any preceding clause, wherein the size and shape of the flexible liner (30) is adapted to the wall (10f) that comprises the wall opening (20).
11. The load body (1) of any preceding clause, wherein the flexible liner (30) covers substantially the entire wall (10f) that comprises the wall opening (20).
12. The load body (1) of any preceding clause, wherein the size of the wall opening (20) is less than 10 percent of the size of the wall (10f) that comprises the wall opening (20).
13. The load body (1) of any preceding clause, wherein the wall (10f) that comprises the wall opening (20) extends between a bottom end (10fb) and a top end (10ft), and the wall opening (20) is positioned closer to the bottom end (10fb) than to the top end (10ft).
14. The load body (1) of clause 13, wherein the wall opening (20) extends from a bottom opening edge to a top opening edge, and the bottom opening edge is positioned less than 30 centimeters from the bottom end (10fb) of the wall (10f).
15. The load body (1) of any preceding clause, comprising a motion-inducing assembly (40) that is in contact, or is arranged to be brought in contact, with the flexible liner (30) to cause the flexible liner (30) to move.
16. The load body (1) of clause 15, wherein the motion-inducing assembly (40) comprises a weight (44) that is attached to the flexible liner (30) or comprises a member (45) that is adapted to be brought in contact with the flexible liner (30).
17. The load body (1) of clause 16, comprising a mount (42) that is attached to the flexible liner (30) and that carries the weight (44), wherein the mount (42) extends through the wall opening (20).
18. The load body (1) of clause 16 or 17, wherein the member (45) is rounded such that it may be in contact with the flexible liner (30) without damaging the flexible liner (30).
19. The load body (1) according to any of clauses 16 to 18, wherein the member (45) comprises a substantially spherical surface that is adapted to be brought in contact with the flexible liner (30).
20. The load body (1) according to any of clauses 16 to 19, comprising a bracket structure (46) that is adapted to be connected to a chassis (52) of the load transport vehicle (50), wherein the bracket structure (46) carries the member (45).
21. The load body (1) of clause 20, wherein the bracket structure (46) or the member (45) extends through the wall opening (20).
22. The load body (1) according to any of clauses 15 to 21, wherein the motion-inducing assembly (40) comprises an actuator (48) that is activatable to cause the flexible liner (30) to move.
23. The load body (1) of clause 22, wherein the actuator (48) is electrically, pneumatically, or hydraulically activatable.
24. The load body (1) of clause 22 or 23, wherein the actuator (48) is a vibrator member.
25. The load body (1) according to any of clauses 22 to 24, wherein the actuator (48) is a vibrator member that is adapted contact the flexible liner (30).
26. The load body (1) according to any of clauses 22 to 25, wherein the actuator (48) is a vibrator member that is attached to the member (45) that is adapted to be brought in contact with the flexible liner (30).
27. The load body (1) of any preceding clause, comprising a front wall (10f), a rear wall, two opposing lateral side walls, and a bottom wall, wherein the wall that comprises the wall opening (20) that is covered by the flexible liner (30) is the front wall (10f).
28. A transport vehicle (50) comprising the load body (1) of any preceding clause.
29. The transport vehicle (50) of clause 28, comprising a chassis (52) that supports the articulatable load body (1), the chassis (52) comprising a motion-inducing assembly (40) that is in contact, or is arranged to be brought in contact, with the flexible liner (30) to cause the flexible liner (30) to move.
30. A method (100) of reducing carryback in a load body (1) of a load transport vehicle (50), the method (100) comprising inducing (120) a motion of a flexible liner (30) covering a wall opening (20) in a wall (10f) of the load body (1).
31. The method (100) of clause 30, comprising tipping (110) the load body (1) before and/or during inducing (120) the motion of the flexible liner (30).
32. The method (100) of clause 30 or 31, comprising tipping (110) the load body (1) after and/or during inducing (120) the motion of the flexible liner (30).
33. The method (100) of clause 32, comprising tipping (110) the load body (1) after inducing (120) the motion of the flexible liner (30).
34. The method (100) according to any of clauses 30 to 33, wherein inducing (120) the motion of the flexible liner (30) comprises activating an actuator (48) that is connected to the flexible liner (30).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A load body (1) for a load transport vehicle (50), the load body (1) being articulatable between a transport position and a tipping position and comprising a wall (10f) that is arranged to be elevated in the tipping position, wherein said wall (10f) comprises a wall opening (20) that is covered by a flexible liner (30).

2. The load body (1) of claim 1, wherein the flexible liner (30) is attached to the load body (1) along a periphery (32) of the flexible liner (30).

3. The load body (1) of claim 1 or 2, wherein the size of the flexible liner (30) is less than 25 percent of a total inner wall area of the load body (1).

4. The load body (1) of any preceding claim, wherein the flexible liner (30) covers substantially the entire wall (10f) that comprises the wall opening (20).

5. The load body (1) of any preceding claim, wherein the size of the wall opening (20) is less than 10 percent of the size of the wall (10f) that comprises the wall opening (20).

6. The load body (1) of any preceding claim, wherein the wall (10f) that comprises the wall opening (20) extends between a bottom end (10fb) and a top end (10ft), and the wall opening (20) is positioned closer to the bottom end (10fb) than to the top end (10ft).

7. The load body (1) of any preceding claim, comprising a motion-inducing assembly (40) that is in contact, or is arranged to be brought in contact, with the flexible liner (30) to cause the flexible liner (30) to move.

8. The load body (1) of claim 7, wherein the motion-inducing assembly (40) comprises a weight (44) that is attached to the flexible liner (30) or comprises a member (45) that is adapted to be brought in contact with the flexible liner (30).

9. The load body (1) of claim 8, comprising a bracket structure (46) that is adapted to be connected to a chassis (52) of the load transport vehicle (50), wherein the bracket structure (46) carries the member (45).

10. The load body (1) according to any of claims 7 to 9, wherein the motion-inducing assembly (40) comprises an actuator (48) that is activatable to cause the flexible liner (30) to move.

11. The load body (1) according to any of claims 8 to 10, wherein the actuator (48) is a vibrator member that is attached to the member (45) that is adapted to be brought in contact with the flexible liner (30).

12. The load body (1) of any preceding claim, comprising a front wall (10f), a rear wall and two opposing lateral side walls, wherein the wall that comprises the wall opening (20) that is covered by the flexible liner (30) is the front wall (10f).

13. A transport vehicle (50) comprising the load body (1) of any preceding claim.

14. The transport vehicle (50) of claim 13, comprising a chassis (52) that supports the articulatable load body (1), the chassis (52) comprising a motion-inducing assembly (40) that is in contact, or is arranged to be brought in contact, with the flexible liner (30) to cause the flexible liner (30) to move.

15. A method (100) of reducing carryback in a load body (1) of a load transport vehicle (50), the method (100) comprising inducing (120) a motion of a flexible liner (30) covering a wall opening (20) in a wall (10f) of the load body (1), wherein inducing (120) the motion of the flexible liner (30) comprises activating an actuator (48) that is connected to the flexible liner (30).
